(19) **Europäisches Patentamt / European Patent Office / Office européen des brevets**

(11) **EP 4 703 037 A1**

(12) **EUROPEAN PATENT APPLICATION**
published in accordance with Art. 153(4) EPC

(43) Date of publication:
04.03.2026 Bulletin 2026/10

(51) International Patent Classification (IPC):
$B01J\ 23/78$ (2006.01)     $B01J\ 23/75$ (2006.01)
$B01J\ 23/83$ (2006.01)     $C10G\ 2/00$ (2006.01)

(21) Application number: 23935051.5

(52) Cooperative Patent Classification (CPC):
Y02P 20/52

(22) Date of filing: 23.11.2023

(86) International application number:
PCT/CN2023/133696

(87) International publication number:
WO 2024/221883 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.04.2023 CN 202310461110

(71) Applicants:
• China Energy Investment Corporation Limited
Beijing 100011 (CN)
• National Institute of Clean-and-Low-Carbon
Energy
Beijing 102209 (CN)

(72) Inventors:
• LIN, Quan
Beijing 102211 (CN)

• ZHANG, Kui
Beijing 102211 (CN)
• CHENG, Meng
Beijing 102211 (CN)
• CHANG, Hai
Beijing 102211 (CN)
• LI, Weizhen
Beijing 102211 (CN)
• ZHANG, Xiaoyu
Beijing 102211 (CN)
• WANG, Tao
Beijing 102211 (CN)
• MEN, Zhuowu
Beijing 102211 (CN)
• LV, Yijun
Beijing 102211 (CN)

(74) Representative: Kador & Partner Part mbB
Corneliusstraße 15
80469 München (DE)

(54) **BA- AND B-DOPED FISCHER-TROPSCH SYNTHESIS IRON-BASED CATALYST AND PREPARATION METHOD THEREFOR**

(57) The present invention provides a Ba- and B-doped iron-based catalyst for Fischer-Tropsch synthesis, which comprises Fe, Cu, K, and $SiO_2$, wherein the iron-based catalyst for Fischer-Tropsch synthesis is doped with Ba and B, and the mass ratios are controlled as follows: when the mass ratio of Fe to $SiO_2$ is 100 : 10 to less than 20, the ratio of Ba to B is 1 to less than 4 : 1; and when the ratio of Fe to $SiO_2$ is 100 : 20 to 40, the ratio of Ba to B is 4 to 6 : 1. The present invention further provides a method for preparing the iron-based catalyst for Fischer-Tropsch synthesis. The iron-based catalyst for Fischer-Tropsch synthesis provided by the present invention is doped with Ba and B in specific contents. Through the synergistic effect between Ba and B, the catalyst achieves excellent catalytic activity and thermal stability. The application of the catalyst can significantly enhance the production efficiency of the Fischer-Tropsch synthesis process, while reducing the production costs, thereby endowing it with substantial economic and social values.

EP 4 703 037 A1

**Description**

TECHNICAL FIELD

The present invention relates to the field of Fischer-Tropsch synthesis, specifically to a Ba- and B-doped iron-based catalyst for Fischer-Tropsch synthesis and a preparation method therefor.

BACKGROUND

The Fischer-Tropsch synthesis reaction enable the synthesis of hydrocarbon compounds with different carbon numbers through CO and $H_2$ under suitable temperatures, pressures, and a catalyst condition. The resultant products can undergo further processing to obtain fuels and chemicals. Thus, Fischer-Tropsch synthesis enables energy conversion through Gas-To-Liquid (GTL) processes using feedstocks, such as coal, natural gas, and biomass, etc. The Fischer-Tropsch synthesis is further categorized into high-temperature Fischer-Tropsch synthesis (HTFT) and low-temperature Fischer-Tropsch synthesis (LTFT). HTFT operates at reaction temperatures of greater than 300°C, typically utilizing fluidized bed reactors and fused iron catalysts, with its primary products being olefins and oxygenates. In contrast, LTFT operates at reaction temperatures of less than 280°C, typically employing fixed bed or slurry bed reactors, comprising precipitated iron catalyst (suitable for a reaction temperature of 250~280°C) or supported cobalt catalyst (suitable for a reaction temperature of 200~230°C), with its primary products being diesel and wax. Cobalt-based catalysts and iron-based catalysts differ in compositions and preparation methods due to their different active phase structures and the primary pathways of main and side reactions. Iron-based catalysts, with iron as the active component, are more suitable for large-scale industrial applications due to their advantages, such as low price, strong poison tolerance, and high content of linear alpha olefins in products, etc.

Iron-based catalysts prepared by the precipitation method exhibit small grain sizes and abundant active sites. However, the small grains are susceptible to sintering, and the Fischer-Tropsch synthesis is a highly exothermic reaction, intense exothermic spots form at the active sites of the catalyst. This necessitates catalyst with high thermal stability; otherwise under the influence of reaction-generated heat, the catalyst may undergo sintering or active particle fragmentation, leading to diminished catalytic performance. Consequently, the development of iron-based catalysts with both high activity and high thermal stability represents a critical research direction for slurry-bed Fischer-Tropsch synthesis technology.

Commonly used approaches to enhance the stability of a catalyst mainly include: (1) incorporating a binder (such as $SiO_2$) to disperse and bond iron grains, (2) optimizing the preparation processes (such as by heat treatment) to enhance particle strength and inhibit fragmentation; and (3) adding a structure promoter (such as Ti, Zr) to improve particle strength. Among these, incorporating a binder is the most effective approach for improving the mechanical strength of a catalyst. Currently, almost all of the iron-based catalysts for Fischer-Tropsch synthesis contain $SiO_2$ binders. However, while silica functions to space out and bind the active particles of a catalyst to avoid the sintering of active phase of the catalyst, it fails to effectively solve the issue of thermal stability of the catalyst. This is because silica exhibits poor thermal conductivity, and silica spheres tend to aggregate under the combined effects of heat and water vapor, which can readily lead to reduced catalyst strength. Researchers have also sought to enhance mechanical strength of catalyst by introducing structure promoters. For example, Chinese patents CN 1245255C, CN 101293206A and CN 101298046A respectively report improved abrasion resistance of a catalyst by adding zinc, zirconium, and titanium auxiliary agents. These methods, which suppress catalyst fragmentation by increasing the strength of catalyst particles, do not enhance the anti-sintering stability of catalyst under reaction-generated heat, thus cannot prevent activity degradation caused by iron grain sintering. Therefore, improving the thermal stability of iron-based catalysts under reactions remains a pressing challenge for precipitated iron-based catalysts for Fischer-Tropsch synthesis.

Chinese patent CN 107913714B discloses an iron-based catalyst for Fischer-Tropsch synthesis comprising Fe, Cu, Mn, K, $SiO_2$, a first auxiliary agent, and a second auxiliary agent, wherein the first auxiliary agent is one or more selected from Ca, Sr, and Ba, while the second auxiliary agent is one or more of La, Ce, Y, and Nd. The patent specifies that its technical solution provides a catalyst with high stability, and low selectivity toward $CO_2$ and $CH_4$. It emphasizes that, within the composition range defined by the invention, the catalyst can maintain low selectivity toward carbon dioxide and methane at high conversion rates under the synergistic effect of rare earth metals, alkaline earth metals, and other auxiliary agents, while effectively suppress the deactivation of catalyst; if only rare earth metals auxiliary agents or alkaline earth metal auxiliary agent are added individually, the above effect cannot be achieved simultaneously. In addition, in terms of its preparation method, the patent discloses that when the solution of the first auxiliary agent is added via an impregnation method, the precipitated catalyst slurry must undergo drying and calcination prior to impregnation, and the impregnated catalyst requires a second drying and calcination, resulting in lengthy preparation steps and high cost.

Chinese patent CN 105478128B discloses a high-abrasion-resistance high-reactivity iron-based catalyst for Fischer-Tropsch synthesis and a preparation method thereof. The main active component of the catalyst is Fe, and it also comprises a structural additive M, anti-sintering additives (yttrium, boron and $SiO_2$) and an electron promoter potassium, wherein M is at least one selected from the group consisting of Zn, Cr, Mn, Zr and Cu. The patent indicates the introduction of anti-sintering elements such as boron and yttrium significantly improves the mechanical strength of the catalyst and notably enhances its abrasion resistance during the reaction process. This can substantially reduce the difficulty of filtering wax products in the reactor, improve the operational stability of the equipment, and lower the operational complexity. However, the catalyst reported in this patent has low overall activity and high selectivity toward methane. In addition, the patent pays no attention to the issue of chemical stability of the prepared catalyst.

## SUMMARY OF THE INVENTION

To address the limitation of existing technologies, one objective of the present invention is to provide a Ba- and B-doped iron-based catalyst for Fischer-Tropsch synthesis. By doping a specific amount of Ba element and B element, the resulting iron-based catalyst for Fischer-Tropsch synthesis that exhibits excellent catalytic performance and thermal stability, thereby significantly improving the reaction efficiency and extending the service life of the catalyst.

Another objective of the present invention is to provide a method for preparing the Ba- and B-doped iron-based catalyst for Fischer-Tropsch synthesis.

A first aspect of the present invention provides a Ba- and B-doped iron-based catalyst for Fischer-Tropsch synthesis, comprising Fe (iron element), Cu (copper element), K (potassium element), and silica ($SiO_2$), wherein the iron-based catalyst is doped with Ba and B, and the mass ratios are controlled as follows: when the ratio of Fe to $SiO_2$ is 100 : 10 to less than 20, the ratio of Ba to B is 1 to less than 4 : 1; and when the ratio of Fe to $SiO_2$ is 100 : 20 to 40, the ratio of Ba to B is 4 to 6 : 1.

Since Ba exhibits good thermal stability and thermal conductivity, leveraging these properties of Ba can effectively enhance the heat resistance and thermal conductivity of the iron-based catalyst for Fischer-Tropsch synthesis. This improvement helps to effectively prevent the sintering of Fe grains and mitigate thermal stress. Furthermore, the alkalinity of Ba also contributes to suppressing the formation of methane ($CH_4$) by-products and improving the selectivity toward C5+ products. However, B can interact with various components in the iron-based catalyst for Fischer-Tropsch synthesis, its presence promotes the synergistic effect between the active phase and the auxiliary agent in the catalyst, which can significantly reduce carbon deposition and deactivation of the catalyst during the Fischer-Tropsch reaction, thereby improving the chemical stability of the catalyst. In the present invention, the iron-based catalyst for Fischer-Tropsch synthesis is uniformly doped with a specific amount of Ba and B, which are highly dispersed on Fe grains and $SiO_2$ particles. The two doping elements can effectively protect Fe grains, preventing both the sintering of Fe grains and the formation of iron silicate species (which are difficult to reduce) caused by the interaction between Fe grains and $SiO_2$ particles. Consequently, the resulting catalyst can exhibit excellent catalytic activity and thermal stability.

In the iron-based catalyst for Fischer-Tropsch synthesis provided by the present invention, the barium auxiliary agent itself exhibits a certain alkalinity, which helps to suppress the formation of methane by-products in the Fischer-Tropsch synthesis reaction, improves the selectivity toward C5+ products and olefins, but simultaneously increases the selectivity toward $CO_2$. The inventor found that when Ba act with B synergistically, they can effectively play the role of Ba as an alkaline earth metal auxiliary agent, while promoting the catalyst to enhance its reduction of carbonization degree, they can also avoid the issue of increased selectivity toward $CO_2$ caused by strong alkaline auxiliary agents (such as barium oxide and barium hydroxide). This enables the resulting catalyst to have low selectivity toward $CO_2$ and $CH_4$, further improving its catalytic performance.

In some preferred embodiments, the iron-based catalyst for Fischer-Tropsch synthesis provided by the present invention may have a specific surface area of 100 to 220 $m^2/g$. In some more preferred embodiments, the iron-based catalyst for Fischer-Tropsch synthesis provided herein may have a specific surface area of 100 to 200 $m^2/g$.

In some preferred embodiments, the iron-based catalyst for Fischer-Tropsch synthesis provided by the present invention may comprise the following components in a mass ratio of Fe : $SiO_2$ : Cu : K: Ba : B = 100 : 10~40 : 0.2~5 : 0.5~8 : 1~10 : 0.4~2.5.

A second aspect of the present invention provides a method for preparing the Ba- and B-doped iron-based catalyst for Fischer-Tropsch synthesis, comprising the following steps:

S1: forming an aqueous mixed solution of a water-soluble iron salt and a water-soluble copper salt, simultaneously preparing a precipitant solution, and adding 0 wt% to 100 wt% of a silicon source to the precipitant solution;
S2: bringing the aqueous mixed solution into contact with the precipitant solution to carry out precipitation reaction, and separating the resulting precipitate after completion of the reaction;
S3: mixing the precipitate with an aqueous solution of potassium auxiliary agent precursor and the remaining silicon source to form a mixed slurry, and subjecting the mixed slurry to slurrying treatment to obtain a slurry of catalyst precursor; and
S4: drying and calcining the slurry of catalyst precursor;

wherein, Ba is added in the following manners:

adding a water-soluble barium salt to the aqueous mixed solution of step S1, with the barium concentration being less than 2.0 g Ba/100 g water; or

formulating a water-soluble barium salt into an aqueous solution with a concentration of less than 2.0 g Ba/100 g water, which is then added to the aqueous solution of potassium auxiliary agent precursor and/or the mixed slurry of step S3;

wherein, B is added in one of the following manners:

adding a boron source to the aqueous mixed solution and/or the precipitant solution of step S1; or

adding a boron source to the aqueous solution of potassium auxiliary agent precursor and/or the mixed slurry of step S3.

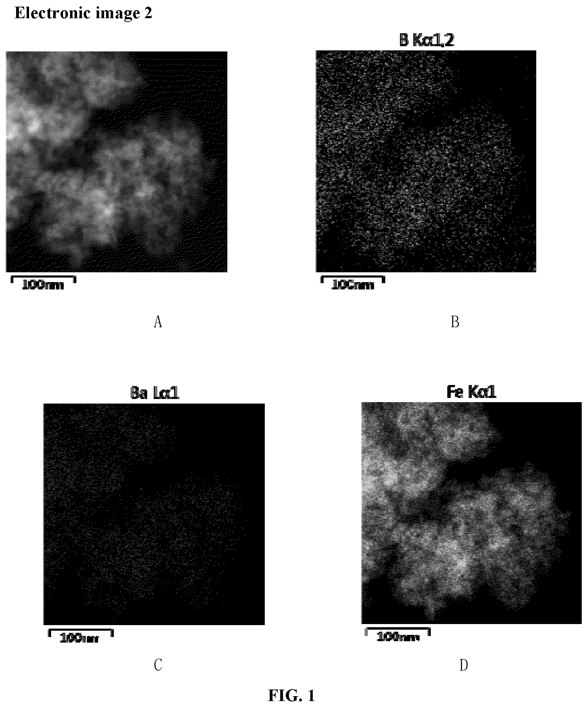

In the method provided by the present invention, controlling the concentration of Ba during its addition can ensure that Ba is uniformly distributed on the surface of the catalyst at a specific content, forming extremely fine particles. Additionally, B itself is readily dispersed in the preparation system and does not tend to crystallize during the calcination process, thus also easily forming fine particles. As a result, the introduction of Ba and B to the iron-based catalyst for Fischer-Tropsch synthesis does not significantly change the original morphology of the catalyst (as shown in Figure 1).

In the method provided by the present invention, the water-soluble barium salt may be one or a combination of barium nitrate and barium hydroxide.

In the method provided by the present invention, the boron source may be one or more of boric acid, metaboric acid, boron oxide, and a water-soluble borate. In some preferred embodiments, the water-soluble borate may be potassium borate and/or sodium borate. In some more preferred embodiments, the boron source may be boric acid.

In the method provided by the present invention, the silicon source may be added entirely or partially to the precipitant solution, or entirely or partially to the mixed slurry. For example, the proportion of the silicon source added to the precipitant solution may account for about 0 wt%, about 10 wt%, about 20 wt%, about 30 wt%, about 40 wt%, about 50 wt%, about 60 wt%, about 70 wt%, about 80 wt%, about 90 wt%, about 100 wt% of the total mass of the silicon source, or it may fall within any range combing the aforesaid mass ratios, with the remaining portion of the silicon source being added to the mixed slurry.

In the method provided by the present invention, the water-soluble iron salt may be any conventional type in the art, including but not limited to iron nitrates, and iron chlorides, or their respective hydrates (where the number of crystalline water molecules may be any conventional amount in the art), such as $Fe(NO_3)_3 \cdot 9H_2O$. In some preferred embodiments, the concentration of Fe in the aqueous mixed solution may be 5 to 100 g/L, such as about 5 g/L, about 10 g/L, about 20 g/L, about 30 g/L, about 40 g/L, about 50 g/L, about 60 g/L, about 70 g/L, about 80 g/L, about 90 g/L, about 100 g/L, or any combination of the foresaid concentration ranges.

In the method provided by the present invention, the water-soluble copper salt may be a conventional type in the art, including but not limited to copper nitrates, and copper chlorides, or their respective hydrates (wherein the number of crystalline water molecules may be any conventional amount in the art), such as $Cu(NO_3)_2 \cdot 3H_2O$.

In the method provided by the present invention, the precipitant may be a conventional type in the art, including but not limited to one or more of sodium carbonate, aqueous ammonia, ammonium carbonate, sodium hydroxide, potassium hydroxide, and potassium carbonate. In some preferred embodiments, the precipitant may be selected from one or more of sodium carbonate, aqueous ammonia, and ammonium carbonate. In some other preferred embodiments, the precipitant in the precipitant solution may have a concentration of 50 to 150 g/L, such as about 50 g/L, about 60 g/L, about 70 g/L, about 80 g/L, about 90 g/L, about 100 g/L, about 110 g/L, about 120 g/L, about 130 g/L, about 140 g/L, about 150 g/L, or may be any combination of the concentration ranges.

In the method provided by the present invention, the silicon source may be a conventional type in the art, including but not limited to one or more of potassium silicate solution, sodium silicate solution, and silica sol solution, wherein $SiO_2$ may have a concentration of 10 wt% to 50 wt%. In some preferred embodiments, $SiO_2$ in the silicon source may have a concentration of 10 wt% to 30 wt%.

In the method provided by the present invention, the potassium auxiliary agent precursor may be a conventional type in the art, including but not limited to one or more of potassium nitrate, potassium carbonate, potassium bicarbonate, potassium silicate, and potassium chloride.

In the method provided by the present invention, in step S2, the precipitation reaction may be carried out at 5 to 95°C, such as about 5°C, about 20°C, about 40°C, about 60°C, about 80°C, about 95°C, or any combination of the temperature ranges. The precipitation time may be 5 to 100 minutes, such as about 5 minutes, about 20 minutes, about 40 minutes, about 60 minutes, about 80 minutes, about 100 minutes, or any combination of the time ranges. Additionally, the pH value during the precipitation may be controlled within a range of 5 to 10, such as about 5, about 6, about 7, about 8, about 9, about 10, or any combination of the pH ranges.

In the method provided by the present invention, in step S3, when forming the mixed slurry, the mixing temperature of the materials may be 20 to 70°C, such as about 20°C, about 30°C, about 40°C, about 50°C, about 60°C, about 70°C, or any combination of the temperature ranges. The mixing time may be 1 to 60 minutes, such as about 5 minutes, about 10 minutes, about 20 minutes, about 30 minutes, about 40 minutes, about 50 minutes, about 60 minutes, or any combination of the time ranges.

In the method provided by the present invention, in step S3, the slurrying temperature for the slurrying treatment may be 10 to 80°C, such as about 10°C, about 20°C, about 30°C, about 40°C, about 50°C, about 60°C, about 70°C, about 80°C, or any combination of the temperature ranges. The slurrying time may be 10 to 80 minutes, such as about 10 minutes, about 20 minutes, about 30 minutes, about 40 minutes, about 50 minutes, about 60 minutes, about 70 minutes, about 80 minutes, or any combination of the time ranges, and the concentration of the slurry during the slurrying treatment process may be controlled within 5 wt% to 40 wt%, such as about 5 wt%, about 10 wt%, about 15 wt%, about 20 wt%, about 25 wt%, about 30 wt%, about 35 wt%, about 40 wt%, or any combination of the concentration ranges.

In the method provided by the present invention, in step S4, the drying may be carried out as follows: first, the slurry of the catalyst precursor is subject to spray drying, and the obtained powder is then dried in an air atmosphere at 110 to 300°C for 1 to 12 hours. In some preferred embodiments, the hot air inlet temperature used for the spray drying may be 180 to 400°C, and the exhaust air outlet temperature may be 100 to 220°C.

In the method provided by the present invention, in step S4, the calcinating may be carried out at a temperature of 400 to 600°C for a duration of 1 to 15 hours.

The technical solution provided by the present invention has the following advantages:

(1) The Ba- and B-doped iron-based catalyst for Fischer-Tropsch synthesis provided by the present invention contains a specific amount of Ba and B. Through the synergistic effect between Ba and B, the catalyst achieves exceptionally excellent catalytic activity and thermal stability.

(2) In the iron-based catalyst for Fischer-Tropsch synthesis provided by the present invention, the synergistic effect between Ba and B also avoids issues arising from excessive alkalinity. This enables the catalyst to exhibit low selectivity toward $CO_2$ and $CH_4$ when applied in Fischer-Tropsch synthesis reactions.

(3) The preparation process of the iron-based catalyst for Fischer-Tropsch synthesis provided by the present invention is simple, only a small amount of barium salt, and boric acid or its salts need to be added. The conditions are mild and easy to control, with no requirement for secondary calcination. It thus features strong operability, low cost, and suitability for large-scale industrial production.

In summary, the Ba- and B-doped iron-based catalyst for Fischer-Tropsch synthesis provided by the present invention is simple and convenient to prepare. It exhibits excellent catalytic performance and good heat resistance, and is not prone to deactivation even after long-term use. Consequently, the application of this catalyst can significantly enhance the production efficiency of a Fischer-Tropsch synthesis process, reduce production costs, and thus possesses considerable economic and social value.

RIEF DESCRIPTION OF THE DRAWINGS

Figure 1 shows the TEM-EDS spectrograms of the catalyst prepared in Example 1, wherein the figure A shows the micro morphology of the catalyst, figure B shows the distribution of B on the catalyst, figure C shows the distribution of Ba on the catalyst, and figure D shows the distribution of Fe on the catalyst.

DETAILED DESCRIPTION OF THE EMBODIMENTS

The technical solution of the present invention will be further described in detail below with reference to specific embodiments.

The testing methods used in the present invention are as follows:

(1) Composition of catalyst components:

The composition of catalyst components is determined using an X-ray fluorescence (XRF) spectrometer.

(2) Specific surface area (BET) of catalyst

The BET specific surface area is calculated using BET model equation by based on the $N_2$ adsorption isotherm at 77 K using the static low-temperature nitrogen adsorption method.

(3) Pore volume (PV)

The pore volume corresponds to the value at P/P0 = 0.98~0.99 on the $N_2$ adsorption isotherm measured at 77 K.

(4) Average pore size (PD):

The average pore size is calculated based on the formula: PD = 4*PV/BET.

Unless otherwise specified, the raw materials or reagents used in the Examples and Comparative Examples of the present invention are commercially available products.

Unless otherwise specified, the percentages used in the Examples and Comparative Examples of the present invention are mass percentages.

**Example 1**

10 kg of $Fe(NO_3)_3 \cdot 9H_2O$, 140 g of $Cu(NO_3)_2 \cdot 3H_2O$, and 260 g of $Ba(NO_3)_2$ were dissolved in deionized water to prepare a 50 L of solution. Separately, 5 kg of ammonium carbonate and 1.84 kg of silica sol solution with a mass concentration of silica of 30% were added to deionized water to prepare a 40 L of precipitant solution. The mixed solution containing iron, copper, and barium was subjected to co-precipitation with the precipitant solution under the following conditions: a precipitation temperature of 30°C, a precipitation time of 60 minutes, and a pH controlled at 9.0. Upon completion of the precipitation reaction, the precipitate slurry was filtered and washed several times to obtain a filter cake of catalyst precursor. 195 g of potassium carbonate and 178 g of boric acid were fully dissolved in 1.5 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 25°C, and the slurrying time was controlled to 20 minutes to obtain a slurry of catalyst precursor. Spray drying was performed with an inlet temperature controlled at 380°C and a hot air outlet temperature controlled at 220°C. The spray dried product was collected, and dried in an air atmosphere at 120°C for 12 hours, and subsequently calcined in an air atmosphere at 450°C for 5 hours to obtain the finished catalyst, designated as catalyst 1.

**Example 2**

10 kg of $Fe(NO_3)_3 \cdot 9H_2O$, 140 g of $Cu(NO_3)_2 \cdot 3H_2O$, and 46 g of $Ba(NO_3)_2$ were dissolved in deionized water to prepare a 50 L of solution. Separately, 4 kg of sodium carbonate and 30 g of silica sol solution with a mass concentration of silica of 20% were added to deionized water to prepare a 40 L of precipitant solution. The mixed solution containing iron, copper, and barium was subjected to co-precipitation with the precipitant solution under the following conditions: a precipitation temperature of 50°C, a precipitation time of 50 minutes, and a pH controlled at 8.5. Upon completion of the precipitation reaction, the precipitate slurry was filtered and washed several times to obtain a filter cake of catalyst precursor. 12 g of potassium carbonate and 138 g of boric acid were fully dissolved in 1.5 kg of deionized water to prepare an aqueous solution of potassium auxiliary agent precursor. The aqueous solution of potassium auxiliary agent precursor and 660 g of silica sol solution with a mass concentration of silica of 20% were sequentially added to the filter cake of catalyst precursor for slurrying treatment, wherein the mass concentration of the slurry was controlled to 15%, the slurrying temperature was controlled to 30°C, and the slurrying time was controlled to 30 minutes to obtain a slurry of catalyst precursor. Spray drying was performed with an inlet temperature controlled at 350°C and a hot air outlet temperature controlled at 160°C for spray drying. The spray dried product was collected, and dried in an air atmosphere at 150°C for 10 hours, and subsequently calcined in an air atmosphere at 400°C for 15 hours to obtain the finished catalyst, designated as catalyst 2.

**Example 3**

10 kg of $Fe(NO_3)_3 \cdot 9H_2O$, and 260 g of $Cu(NO_3)_2 \cdot 3H_2O$ were dissolved in deionized water to prepare a 50 L of solution. Separately, 8 kg of aqueous ammonia with a mass concentration of 25% and 140 g of potassium silicate solution with a modulus of 1 and a mass concentration of silica of 20% were added to deionized water to prepare a 40 L of precipitant solution. The mixed solution containing iron and copper was subjected to co-precipitation with the precipitant solution under the following conditions: a precipitation temperature of 70°C, a precipitation time of 30 minutes, and a pH controlled at 5.0. Upon completion of the precipitation reaction, the precipitate slurry was filtered and washed several times to obtain a filter cake of catalyst precursor. 104 g of potassium carbonate and 79 g of boric acid were fully dissolved in 0.5 kg of deionized water to prepare an aqueous solution of potassium auxiliary agent precursor, and 105 g of $Ba(NO_3)_2$ was fully dissolved in 3.0 kg of deionized water to prepare an aqueous solution of barium auxiliary agent. 2.63 kg of silica sol solution with a mass concentration of silica of 20%, followed by the aqueous solutions of barium auxiliary agent and potassium auxiliary agent precursor were sequentially added to the filter cake of catalyst precursor for slurrying treatment. The mass concentration of the slurry was controlled to 15%, the slurrying temperature was controlled to 50°C, and the slurrying time was controlled to 40 minutes to obtain a slurry of catalyst precursor. Spray drying was performed with an inlet temperature controlled at 320°C and a hot air outlet temperature controlled at 140°C. The spray dried product was collected, and dried in an air atmosphere at 180°C for 8 hours, and subsequently calcined in an air atmosphere at 600°C for 6 hours to obtain the finished catalyst, designated as catalyst 3.

**Example 4**

10 kg of $Fe(NO_3)_3 \cdot 9H_2O$ and 10 g of $Cu(NO_3)_2 \cdot 3H_2O$ were dissolved in deionized water to prepare a 50 L of solution. Separately, 12 kg of aqueous ammonia with a mass concentration of 25% was added to deionized water to prepare a 40 L of precipitant solution. The mixed solution containing iron and copper was subjected to co-precipitation with the precipitant solution under the following conditions: a precipitation temperature controlled to 90°C, a precipitation time controlled to 20 minutes, and an end point pH controlled to 6.0. Upon completion of the precipitation reaction, the precipitate slurry was filtered and washed several times to obtain a filter cake of catalyst precursor. The filter cake of catalyst precursor was added to 1.5 kg of deionized water for slurrying, 104 g of potassium carbonate, 178 g of boric acid and 460 g of potassium silicate solution with a modulus of 1 and a content of silica of 30% were fully dissolved in 1.0 kg of deionized water to prepare an aqueous solution of potassium auxiliary agent precursor. The aqueous solution of potassium auxiliary agent precursor was added to the filter cake slurry of catalyst precursor, and mixed fully, and then 5 wt% of nitric acid solution was added to the slurry to adjust the endpoint pH to 7.0, and the above slurry was filtered to obtain a filter cake. 260 g of $Ba(NO_3)_2$ was dissolved fully into 7 kg of deionized water to prepare an aqueous solution of barium auxiliary agent, which was added to the filter cake for slurrying treatment, the mass concentration of the slurry was controlled to 15%, the slurrying temperature was controlled to 70°C, and the slurrying time was controlled to 50 minutes to obtain a slurry of catalyst precursor. Spray drying was performed with a temperature controlled at 290°C and a hot air outlet temperature controlled at 120°C. The spray dried product was collected, and dried in an air atmosphere at 200°C for 6 hours, and subsequently calcined in an air atmosphere at 600°C for 8 hours to obtain the finished catalyst, designated as catalyst 4.

**Example 5**

10 kg of $Fe(NO_3)_3 \cdot 9H_2O$, 260 g of $Cu(NO_3)_2 \cdot 3H_2O$, and 260 g of $Ba(NO_3)_2$ were dissolved in deionized water to prepare a 50 L of solution. Separately, 3.5 kg of sodium carbonate and 1.73 kg of sodium silicate solution with a modulus of 1 and a mass concentration of silica of 20% were added to deionized water to prepare a 40 L of precipitant solution. The mixed solution containing iron, copper and barium was subjected to co-precipitation with the precipitant solution under the following conditions: a precipitation temperature of 10°C, a precipitation time of 90 minutes, and an endpoint pH of 7.0. Upon completion of the precipitation reaction, the precipitate slurry was filtered and washed several times to obtain a filter cake of catalyst precursor. 12 g of potassium carbonate and 138 g of boric acid were fully dissolved in 1.5 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 10°C, and a slurrying time was controlled to 60 minutes to obtain the slurry of catalyst precursor. Spray drying was performed with an inlet temperature controlled at 260°C and a hot air outlet temperature controlled at 110°C. The spray dried product was collected, and dried in an air atmosphere at 220°C for 4 hours, and subsequently calcined in an air atmosphere at 550°C for 10 hours to obtain the finished catalyst, designated as catalyst 5.

**Example 6**

10 kg of $Fe(NO_3)_3 \cdot 9H_2O$, 10 g of $Cu(NO_3)_2 \cdot 3H_2O$, and 118 g of $Ba(NO_3)_2$ were dissolved in deionized water to prepare a 50 L of solution. Separately, 4.5 kg of ammonium carbonate and 120 g of sodium silicate solution with a modulus of 3.5 and a mass concentration of silica of 30% were added to deionized water to prepare a 40 L of precipitant solution. The mixed solution containing iron, copper and barium was subjected to co-precipitation with the precipitant solution under the following conditions: a precipitation temperature of 30°C, a precipitation time of 30 minutes, and an endpoint pH of 8.5. Upon completion of the precipitation reaction, the precipitate slurry was filtered and washed several times to obtain a filter cake of catalyst precursor. 195 g of potassium carbonate and 79 g of boric acid were fully dissolved in 1.5 kg of deionized water to prepare an aqueous solution of potassium auxiliary agent precursor. The aqueous solution of potassium auxiliary agent precursor and 1.04 kg of silica sol solution with a mass concentration of silica of 30% were added to the filter cake of catalyst precursor for slurrying treatment, wherein the mass concentration of the slurry was controlled to 15%, the slurrying temperature was controlled to 25°C, and the slurrying time was controlled to 20 minutes to obtain a slurry of catalyst precursor. Spray drying was performed with an inlet temperature controlled at 230°C and a hot air outlet temperature controlled at 105°C. The spray dried products was collected, dried in an air atmosphere at 250°C for 3 hours, and subsequently calcined in an air atmosphere at 400°C for 12 hours to obtain the finished catalyst, designated as catalyst 6.

**Example 7**

10 kg of $Fe(NO_3)_3 \cdot 9H_2O$, and 260 g of $Cu(NO_3)_2 \cdot 3H_2O$ were dissolved in deionized water to prepare a 50 L of solution. Separately, 8 kg of aqueous ammonia with a mass concentration of 25% and 690 g of potassium silicate solution with a modulus of 3.5 and a mass concentration of silica of 20% were added to deionized water to prepare a 40 L of precipitant solution. The mixed solution containing iron and copper was subjected to co-precipitation with the precipitant solution under the following conditions: a precipitation temperature of 50°C, a precipitation time of 60 minutes, and an endpoint pH of 5.0. Upon completion of the precipitation reaction, the precipitate slurry was filtered and washed several times to obtain a filter cake of catalyst precursor. 160 g of $Ba(NO)_3$ was fully dissolved in 7 kg of deionized water to prepare an aqueous solution of barium auxiliary agent. 195 g of potassium carbonate and 138 g of boric acid were fully dissolved in 1.0 kg of deionized water to prepare an aqueous solution of potassium auxiliary agent precursor. The aqueous solutions of boron auxiliary agent and potassium auxiliary agent precursor were successively added to the filter cake of catalyst precursor for slurrying treatment, wherein the mass concentration of the slurry was controlled to 15%, the slurrying temperature was controlled to 30°C, and the slurrying time was controlled to 30 minutes to obtain a slurry of catalyst precursor. Spray drying was performed with an inlet temperature controlled at 200°C and a hot air outlet temperature controlled at 105°C. The spray dried product was collected, and dried in an air atmosphere at 280°C for 2 hours, and then calcined in an air atmosphere at 500°C for 8 hours to obtain the finished catalyst, designated as catalyst 7.

**Example 8**

10 kg of $Fe(NO_3)_3 \cdot 9H_2O$ and 10 g of $Cu(NO_3)_2 \cdot 3H_2O$ were dissolved in deionized water to prepare a 50 L of solution. Separately, 9 kg of aqueous ammonia with a mass concentration of 25% and 2.76 kg of sodium silicate solution with a modulus of 1 and a mass concentration of silica of 20% were added to deionized water to prepare a 40 L of precipitant solution. The precipitant solution was subjected to co-precipitation with the mixed solution containing iron and copper under the following conditions: a precipitation temperature of 70°C, a precipitation time of 40 minutes, and an endpoint pH of 6.0. Upon completion of the precipitation reaction, the precipitate slurry was filtered and washed several times to obtain a filter cake of catalyst precursor. 160 g of $Ba(NO)_3$ was fully dissolved in 7 kg of deionized water to prepare an aqueous solution of barium auxiliary agent. 12 g of potassium carbonate and 79 g of boric acid were fully dissolved in 1.0 kg of deionized water to prepare an aqueous solution of potassium auxiliary agent precursor. The aqueous solutions of barium auxiliary agent and potassium auxiliary agent precursor were successively added to the filter cake of catalyst precursor for slurrying treatment, wherein the mass concentration of the slurry was controlled to 15%, the slurrying temperature was controlled to 50°C, and the slurrying time was controlled to 40 minutes to obtain a slurry of catalyst precursor. Spray drying was performed with an inlet temperature controlled at 180°C and a hot air outlet temperature controlled at 100°C. The spray dried product was collected, and dried in an air atmosphere at 300°C for 1 hour, and then calcined in an air atmosphere at 550°C for 8 hours to obtain the finished catalyst, designated as catalyst 8.

**Example 9**

10 kg of $Fe(NO_3)_3 \cdot 9H_2O$, 140 g of $Cu(NO_3)_2 \cdot 3H_2O$, 79 g of $Ba(NO_3)_2$ and 40 g of boric acid were dissolved in deionized water to prepare a 50 L of solution. Separately, 3 kg of sodium carbonate and 1.73 kg of sodium silicate solution with a modulus of 3.5 and a mass concentration of silica of 20% were added to deionized water to prepare a 40 L of precipitant solution. The mixed solution containing iron, copper, and barium was subjected to co-precipitation with the precipitant solution under the following conditions: a precipitation temperature of 30°C, a precipitation time of 80 minutes, and a pH of 7.0. Upon completion of the precipitation reaction, the precipitate slurry was filtered and washed several times to obtain a filter cake of catalyst precursor. 152 g of potassium nitrate was fully dissolved in 1.5 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 25°C, and the slurrying time was controlled to 50 minutes to obtain a slurry of catalyst precursor. Spray drying was performed with an inlet temperature controlled at 380°C and a hot air outlet temperature controlled at 220°C. The spray dried product was collected, dried in an air atmosphere at 120°C for 12 hours, and then calcined in an air atmosphere at 600°C for 10 hours to obtain the finished catalyst, designated as catalyst 9.

**Example 10**

10 kg of $Fe(NO_3)_3 \cdot 9H_2O$, 10 g of $Cu(NO_3)_2 \cdot 3H_2O$, 131 g of $Ba(NO_3)_2$ and 178 g of boric acid were dissolved in deionized water to prepare a 50 L of solution. Separately, 4.5 kg of ammonium carbonate and 460 g of sodium silicate solution with a modulus of 1 and a mass concentration of silica of 30% were added to deionized water to prepare a 40 L of precipitant solution. The precipitant solution was subjected to co-precipitation with the mixed solution containing iron, copper, and barium under the following conditions: a precipitation temperature of 50°C, a precipitation time of 50 minutes, and an endpoint pH of 8.5. Upon completion of the precipitation reaction, the precipitate slurry was filtered and washed several times to obtain a filter cake of catalyst precursor. 18 g of potassium nitrate was fully dissolved in 1.5 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 30°C, and the slurrying time was controlled to 60 minutes to obtain a slurry of catalyst precursor. Spray drying was performed with an inlet temperature controlled at 350°C and a hot air the outlet temperature controlled at 150°C. The spray dried product was collected, and dried in an air atmosphere at 150°C for 10 hours, and then calcined in an air atmosphere at 400°C for 9 hours to obtain the finished catalyst, designated as catalyst 10.

**Example 11**

10 kg of $Fe(NO_3)_3 \cdot 9H_2O$, 260 g of $Cu(NO_3)_2 \cdot 3H_2O$ and 158 g of boric acid were dissolved in deionized water to prepare a 50 L of solution. Separately, 8 kg of aqueous ammonia with a mass concentration of 25% was added to deionized water to prepare a 40 L of precipitant solution. The precipitant solution was subjected to co-precipitation with the mixed solution containing iron and copper under the following conditions: a precipitation temperature of 90°C, a precipitation time of 20 minutes, and an endpoint pH of 5.0. Upon completion of the precipitation reaction, the precipitate slurry was filtered and washed several times to obtain a filter cake of catalyst precursor. 260 g of $Ba(NO)_3$ was fully dissolved in 7 kg of deionized water to prepare an aqueous solution of barium auxiliary agent. 286 g of potassium nitrate was fully dissolved in 0.5 kg of deionized water to prepare an aqueous solution of potassium auxiliary agent precursor. The aqueous solutions of barium auxiliary agent and potassium auxiliary agent precursor and 1.84 kg of silica sol solution with a mass concentration of silica of 30% were successively added to the filter cake of catalyst precursor for slurrying treatment, wherein the mass concentration of the slurry was controlled to 15%, the slurrying temperature was controlled to 70°C, and the slurrying time was controlled to 20 minutes to obtain a slurry of catalyst precursor. Spray drying was performed with an inlet temperature controlled at 320°C and a hot air outlet temperature of controlled at 130°C. The spray dried product was collected, dried in an air atmosphere at 180°C for 8 hours, and then calcined in an air atmosphere at 600°C for 4 hours to obtain the finished catalyst, designated as catalyst 11.

**Example 12**

10 kg of $Fe(NO_3)_3 \cdot 9H_2O$ and 140 g of $Cu(NO_3)_2 \cdot 3H_2O$ were dissolved in deionized water to prepare a 50 L of solution. Separately, 9 kg of aqueous ammonia with a mass concentration of 25%, 630 g of potassium silicate solution with a modulus of 3.5 and a mass concentration of silica of 30% and 40 g of boric acid were added to deionized water to prepare a 40 L of precipitant solution. The mixed solution containing iron and copper was subjected to co-precipitation with the precipitant solution under the following conditions: a precipitation temperature of 90°C, a precipitation time of 20 minutes, and a pH of 6.0. Upon completion of the precipitation reaction, the precipitate slurry was filtered and washed several times to obtain a filter cake of catalyst precursor. 79 g of $Ba(NO)_3$ was fully dissolved in 2.5 kg of deionized water to prepare an aqueous solution of barium auxiliary agent. The aqueous solution of barium auxiliary agent and 530 g of potassium silicate solution with a modulus of 3.5 and a mass concentration of silica of 30% were successively added to the filter cake of catalyst precursor for slurrying treatment, wherein the mass concentration of the slurry was controlled to 15%, the slurrying temperature was controlled to 70°C, and the slurrying time was controlled to 30 minutes to obtain a slurry of catalyst precursor. Spray drying was performed with an inlet temperature controlled at 290°C and a hot air outlet temperature controlled at 120°C. The spray dried product was collected, and dried in an air atmosphere at 200°C for 6 hours, and then calcined in an air atmosphere at 600°C for 4 hours to obtain the finished catalyst, designated as catalyst 12.

**Example 13**

10 kg of $Fe(NO_3)_3 \cdot 9H_2O$, 140 g of $Cu(NO_3)_2 \cdot 3H_2O$, and 260 g of $Ba(NO_3)_2$ were dissolved in deionized water to prepare a 50 L of solution. Separately, 3 kg of sodium carbonate, 750 g of silica sol solution with a mass concentration of silica of 25% and 178 g of boric acid were added to deionized water to prepare a 40 L of precipitant solution. The precipitant solution was subjected to co-precipitation with the mixed solution containing iron, copper, and barium under the following conditions: a precipitation temperature of 70°C, a precipitation time of 30 minutes, and an endpoint pH of 7.0. Upon completion of the precipitation reaction, the precipitate slurry was filtered and washed several times to obtain a filter cake of catalyst precursor. 630 g of potassium silicate solution with a modulus of 3.5 and a mass concentration of silica of 25% was fully dissolved in 1.0 kg of deionized water to prepare an aqueous solution of potassium auxiliary agent precursor. The aqueous solution of potassium auxiliary agent precursor was added to the filter cake of catalyst precursor for slurrying treatment, wherein the mass concentration of the slurry was controlled to 15%, the slurrying temperature was controlled to 50°C, and the slurrying time was controlled to 40 minutes to obtain a slurry of catalyst precursor. Spray drying was performed with an inlet temperature controlled at 260°C and a hot air outlet temperature controlled at 110°C. The spray dried product was collected, and dried in an air atmosphere at 220°C for 4 hours, and then calcined in an air atmosphere at 450°C for 6 hours to obtain the finished catalyst, designated as catalyst 13.

**Example 14**

10 kg of $Fe(NO_3)_3 \cdot 9H_2O$, 26 g of $Cu(NO_3)_2 \cdot 3H_2O$ and 132 g of $Ba(NO_3)_2$ were dissolved in deionized water to prepare a 50 L of solution. Separately, 4.5 kg of ammonium carbonate and 99 g of boric acid were added to deionized water to prepare a 40 L of precipitant solution. The mixed solution containing iron, copper, and barium was subjected to co-precipitation with the precipitant solution under the following conditions: a precipitation temperature of 30°C, a precipitation time of 70 minutes, and a pH controlled at 8.5. Upon completion of the precipitation reaction, the precipitate slurry was filtered and washed several times to obtain a filter cake of catalyst precursor. 580 g of potassium silicate solution with a modulus of 3.5 and a mass concentration of silica of 25% was fully dissolved in 0.5 kg of deionized water to prepare an aqueous solution of potassium auxiliary agent precursor. The aqueous solution of potassium auxiliary agent precursor and 1.08 kg of silica sol solution with a mass concentration of silica of 25% were successively added to the filter cake of catalyst precursor for slurrying treatment, wherein the mass concentration of the slurry was controlled to 15%, the slurrying temperature was controlled to 25°C, and the slurrying time was controlled to 50 minutes to obtain a slurry of catalyst precursor. Spray drying was performed with an inlet temperature controlled at 230°C and a hot air outlet temperature controlled at 105°C. The spray dried product was collected, and dried in an air atmosphere at 250°C for 3 hours, and then calcined in an air atmosphere at 550°C for 6 hours to obtain the finished catalyst, designated as catalyst 14.

**Example 15**

10 kg of $Fe(NO_3)_3 \cdot 9H_2O$ and 68 g of $Cu(NO_3)_2 \cdot 3H_2O$ were dissolved in deionized water to prepare a 50 L of solution. Separately, 8 kg of aqueous ammonia with a mass concentration of 25%, 770 g of sodium silicate solution with a modulus of 3.5 and a mass concentration of silica of 25% and 40 g of boric acid were added to deionized water to prepare a 40 L of precipitant solution. The mixed solution containing iron and copper was subjected to co-precipitation with the precipitant solution under the following conditions: a precipitation temperature of 50°C, a precipitation time of 40 minutes, and a pH controlled at 5.0. Upon completion of the precipitation reaction, the precipitate slurry was filtered and washed several times to obtain a filter cake of catalyst precursor. 39 g of $Ba(NO)_3$ was fully dissolved in 1.5 kg of deionized water to prepare an aqueous solution of barium auxiliary agent. 107 g of potassium nitrate was fully dissolved in 0.5 kg of deionized water to prepare an aqueous solution of potassium auxiliary agent precursor. The aqueous solutions of barium auxiliary agent and potassium auxiliary agent precursor were successively added to the filter cake of catalyst precursor for slurrying treatment, wherein the mass concentration of the slurry was controlled to 15%, the slurrying temperature was controlled to 30°C, and the slurrying time was controlled to 60 minutes to obtain a slurry of catalyst precursor. Spray drying was performed with an inlet temperature controlled at 200°C and a hot air outlet temperature controlled at 100°C. The spray dried product was collected, and dried in an air atmosphere at 280°C for 2 hours, and then calcined in an air atmosphere at 550°C for 4 hours to obtain the finished catalyst, designated as catalyst 15.

**Example 16**

10 kg of $Fe(NO_3)_3 \cdot 9H_2O$ and 184 g of $Cu(NO_3)_2 \cdot 3H_2O$ were dissolved in deionized water to prepare a 50 L of solution. Separately, 9 kg of aqueous ammonia with a mass concentration of 25%, 550 g of sodium silicate solution with a modulus of 3.5 and a mass concentration of silica of 25% and 119 g of boric acid were added to deionized water to prepare a 40 L of precipitant solution. The mixed solution containing iron and copper was subjected to co-precipitation with a precipitant solution under the following conditions: a precipitation temperature of 10°C, a precipitation time of 90 minutes, and a pH of 6.0. Upon completion of the precipitation reaction, the precipitate slurry was filtered and washed several times to obtain a filter cake of catalyst precursor. 210 g of $Ba(NO)_3$ was fully dissolved in 7 kg of deionized water to prepare an aqueous solution of barium auxiliary agent. 214 g of potassium nitrate was fully dissolved in 0.5 kg of deionized water to prepare an aqueous solution of potassium auxiliary agent precursor. The aqueous solutions of barium auxiliary agent and potassium auxiliary agent precursor and 550 g of silica sol solution with a mass concentration of silica of 25% were successively added to the filter cake of catalyst precursor for slurrying treatment, wherein the mass concentration of the slurry was controlled to 15%, the slurrying temperature was controlled to 10°C, and the slurrying time was controlled to 60 minutes to obtain a slurry of catalyst precursor. Spray drying was performed with an inlet temperature controlled at 180°C and a hot air outlet temperature controlled at 100°C. The spray dried product was collected, and dried in an air atmosphere at 300°C for 1 hour, and then calcined in an air atmosphere at 600°C for 2 hours to obtain the finished catalyst, designated as catalyst 16.

**Comparative Example 1**

Comparative Example 1 was carried out in the same manner as Example 1, except no $Ba(NO_3)_2$ was added, and the finished catalyst thus obtained was designated as comparative catalyst 1.

**Comparative Example 2**

Comparative Example 2 was carried out in the same manner as Example 2, except that no boric acid was added, and the finished catalyst thus obtained was designated as comparative catalyst 2.

**Comparative Example 3**

Comparative Example 3 was carried out in the same manner as Example 3, except neither $Ba(NO_3)_2$ nor boric acid was added (only 104 g of potassium carbonate was fully dissolved into 1.0 kg of deionized water to prepare an aqueous solution of potassium auxiliary agent precursor), the finished catalyst thus obtained was designated as comparative catalyst 3.

**Comparative Example 4**

Comparative Example 4 was carried out in the same manner as Example 4, except that $Ba(NO_3)_2$ was replaced with 815 g of $Ca(NO_3)_2 \cdot 4H_2O$, the finished catalyst thus obtained was designated as comparative catalyst 4.

**Comparative Example 5**

Comparative Example 5 was carried out in the same manner as Example 5, except that $Ba(NO_3)_2$ was replaced with 1458 g of $Mg(NO_3)_2 \cdot 6H_2O$, the finished catalyst thus obtained was designated as comparative catalyst 5.

**Comparative Example 6**

Comparative Example 6 was carried out in the same manner as Example 6, except that $Ba(NO_3)_2$ was replaced with 33 g of $Sr(NO_3)_2$, the finished catalyst thus obtained was designated as comparative catalyst 6.

**Comparative Example 7**

Comparative Example 7 was carried out in the same manner as Example 9, except that boric acid was replaced with 96 g of $Al(NO_3)_3 \cdot 9H_2O$, the finished catalyst thus obtained was designated as comparative catalyst 7.

**Comparative Example 8**

Comparative Example 8 was carried out in the same manner as Example 8, except that 290 g of $Ba(NO_3)_2$ was fully dissolved to 8 kg of deionized water to prepare an aqueous solution of barium auxiliary agent, the finished catalyst thus obtained was designated as comparative catalyst 8.

**Comparative Example 9**

Comparative Example 9 was carried out in the same manner as Example 7, except that the amount of $Ba(NO_3)_2$ was changed to 24 g, the finished catalyst thus obtained was designated as comparative catalyst 9.

**Comparative Example 10**

Comparative Example 10 was carried out in the same manner as Example 10, except that the amount of boric acid was changed to 206 g, the finished catalyst thus obtained was designated as comparative catalyst 10.

**Comparative Example 11**

Comparative Example 11 was carried out in the same manner as Example 11, except that the amount of boric acid was changed to 24 g, the finished catalyst thus obtained was designated as comparative catalyst 11.

**Comparative Example 12**

Comparative Example 12 was carried out in the same manner as Example 12, except that the amount of boric acid was changed to 24 g, and the amount of $Ba(NO_3)_2$ was changed to 290 g, and they were fully dissolved in 8 kg of deionized water to prepare an aqueous solution of barium auxiliary agent, the finished catalyst thus obtained was designated as comparative catalyst 12.

**Comparative Example 13**

Comparative Example 13 was carried out in the same manner as Example 13, except that the amount of boric acid was changed to 206 g, and the amount of $Ba(NO_3)_2$ was changed to 24 g, the finished catalyst thus obtained was designated as comparative catalyst 13.

**Comparative Example 14**

Comparative Example 14 was carried out in the same manner as Example 14, except that the amount of $Ba(NO_3)_2$ was changed to 145 g, and the amount of silica sol was changed to 0.25 kg, the finished catalyst thus obtained was designated as comparative catalyst 14.

**Comparative Example 15**

Comparative Example 15 was carried out in the same manner as Example 14, except that the amount of $Ba(NO_3)_2$ was changed to 26 g, and the amount of silica sol was changed to 0.25 kg, the finished catalyst thus obtained was designated as comparative catalyst 15.

**Comparative Example 16**

Comparative Example 16 was carried out in the same manner as Example 14, except that the amount of $Ba(NO_3)_2$ was changed to 208 g, and the amount of silica sol was changed to 0.8 kg, the finished catalyst thus obtained was designated as comparative catalyst 16.

**Comparative Example 17**

Comparative Example 17 was carried out in the same manner as Example 14, except that the amount of $Ba(NO_3)_2$ was changed to 104 g, and the amount of silica sol was changed to 0.8 kg, the finished catalyst thus obtained was designated as comparative catalyst 17.

**Testing Examples**

Testing equipment: 1 L stirred tank reactor.

Testing conditions: 10 g of each catalyst prepared in Examples 1 to 16 and Comparative Examples 1 to 17 was mixed with 300 mL of liquid paraffin, respectively. The mixture was placed in a 1 L stirred tank reactor for reduction activation, and switched to the Fischer-Tropsch synthesis reaction conditions to carry out reaction. The process conditions for reduction activation and Fischer-Tropsch synthesis reaction are as follows:

(1) Reduction activation: Temperature-programmed reduction was performed using a synthesis gas with a $H_2/CO$ volume ratio of 20 : 1. The reduction process was carried out in stages: heating from 30 to 200°C for 4 hours, heating from 200 to 265°C for 10 hours, followed by constant temperature reduction at 265°C for 24 hours., The space velocity of the synthesis gas was 8000 $h^{-1}$, and the gauge pressure during reduction was 3.0 MPa.
(2) Fischer-Tropsch synthesis: After completion of the reduction, the volume ratio of $H_2/CO$ in the synthesis gas was adjusted to 3 : 1, and the system was stabilized for a period of time. This stabilization period continued until the gas phase composition in the reaction tail gas showed no significant change over time, at which point this moment was recorded as reaction point 0.

(3) Data calculation: The mole amount of CO in the feed at the feed port of the stirred tank reactor was measured and analyzed, the mole amounts of CO, $CO_2$, and $CH_4$ in the effluent at the outlet were measured and analyzed. The CO conversion rate (%), $CO_2$ selectivity (%), and $CH_4$ selectivity (%) were calculated using the following formulas, respectively:

CO conversion rate (%) = [(moles of CO in feed - moles of CO in effluent)/moles of CO in feed] × 100%;

$CO_2$ selectivity (%) = [moles of $CO_2$ in effluent/(moles of CO in feed - moles of CO in effluent)] × 100%; and

$CH_4$ selectivity (%) = [moles of $CH_4$ in effluent/(moles of CO in feed × CO conversion rate (%) × (1-$CO_2$ selectivity (%))] × 100%.

The catalyst deactivation rate refers to the rate at which its reaction activity (conversion rate of carbon monoxide) decreases from the plateau period of the reaction to the end of the reaction, expressed in%/h.

The results regarding composition, properties, and reaction performance of the catalysts prepared in Examples 1 to 16 are shown in Table 1, while those of the catalysts prepared in Comparative Examples 1 to 17 are shown in Table 2.

**Table 1**

| Compositions | Fe | Cu | K | $SiO_2$ | Ba | B | X(CO) | S($CO_2$) | S($CH_4$) | Deactivation rate (%/h) | BET ($m^2$/g) | PV (ML/g) | PD (nm) |
|---|---|---|---|---|---|---|---|---|---|---|---|---|---|
| IE1 | 100 | 2.6 | 8 | 40 | 10 | 2.25 | 85 | 13 | 1.2 | 0.006 | 190 | 0.9 | 19 |
| IE2 | 100 | 2.6 | 0.5 | 10 | 1.75 | 1.75 | 86 | 13 | 1.7 | 0.008 | 125 | 0.5 | 16 |
| IE3 | 100 | 5 | 4.25 | 40 | 4 | 1 | 81 | 12 | 1.6 | 0.006 | 148 | 0.6 | 16 |
| IE4 | 100 | 0.2 | 4.25 | 10 | 6 | 2.25 | 82 | 13 | 1.8 | 0.004 | 157 | 0.6 | 15 |
| IE5 | 100 | 5 | 0.5 | 25 | 10 | 1.75 | 77 | 13 | 1.7 | 0.007 | 160 | 0.7 | 18 |
| IE6 | 100 | 0.2 | 8 | 25 | 4.5 | 1 | 83 | 13 | 1.2 | 0.005 | 121 | 0.5 | 17 |
| IE7 | 100 | 5 | 8 | 10 | 6 | 1.75 | 85 | 12 | 1.6 | 0.006 | 187 | 0.9 | 19 |
| IE8 | 100 | 0.2 | 0.5 | 40 | 6 | 1 | 83 | 12 | 1.5 | 0.006 | 163 | 0.6 | 15 |
| IE9 | 100 | 2.6 | 4.25 | 25 | 3 | 0.5 | 85 | 12 | 1.1 | 0.004 | 146 | 0.7 | 19 |
| IE10 | 100 | 0.2 | 0.5 | 10 | 5 | 2.25 | 86 | 13 | 1.2 | 0.005 | 106 | 0.4 | 15 |
| IE11 | 100 | 5 | 8 | 40 | 10 | 2 | 83 | 11 | 1.5 | 0.007 | 142 | 0.5 | 14 |
| IE12 | 100 | 2.6 | 4.25 | 25 | 3 | 0.5 | 75 | 13 | 1.3 | 0.008 | 135 | 0.5 | 15 |
| IE13 | 100 | 2.6 | 4.25 | 25 | 10 | 2.25 | 84 | 12 | 1.4 | 0.005 | 104 | 0.4 | 15 |
| IE14 | 100 | 0.5 | 3.9 | 30 | 5 | 1.25 | 85 | 14 | 1.6 | 0.005 | 181 | 0.8 | 19 |
| IE15 | 100 | 1.3 | 3 | 14 | 1.5 | 0.5 | 80 | 11 | 1.7 | 0.005 | 193 | 1.0 | 21 |
| IE16 | 100 | 3.5 | 6 | 20 | 8 | 1.5 | 87 | 11 | 1.5 | 0.005 | 118 | 0.5 | 17 |

"IE" denotes "Inventive Example".

**Table 2**

| | Compositions | X(CO) | S($CO_2$) | S($CH_4$) | Deactivation rate (%/h) | BET ($m^2$/g) | PV (mL/g) | PD (nm) |
|---|---|---|---|---|---|---|---|---|
| CE1 | 100Fe : 2.6Cu : 8K : 40$SiO_2$ : 2.25B | 78 | 20 | 1.4 | 0.02 | 187 | 1.0 | 21 |

(continued)

| | Compositions | X(CO) | S(CO$_2$) | S(CH$_4$) | Deac tivati on rate (%/h ) | BET (m$^2$/ g) | PV (mL/g) | PD (nm) |
|---|---|---|---|---|---|---|---|---|
| CE2 | 100Fe : 2.6Cu : 0.5K : 10SiO$_2$ : 1.75Ba | 67 | 18 | 1.7 | 0.03 | 126 | 0.6 | 20 |
| CE3 | 100Fe : 5Cu : 4.25K : 40SiO$_2$ | 66 | 16 | 1.5 | 0.02 | 213 | 0.8 | 15 |
| CE4 | 100Fe : 0.2Cu : 4.25K : 10SiO$_2$ : 10Ca | 77 | 19 | 1.5 | 0.03 | 145 | 0.7 | 19 |
| CE5 | 100Fe : 5Cu : 0.5K : 25SiO$_2$ :10Mg | 75 | 18 | 1.8 | 0.01 | 125 | 0.5 | 16 |
| CE6 | 100Fe : 0.2Cu : 8K : 25SiO$_2$ :1Sr | 75 | 17 | 1.7 | 0.02 | 137 | 0.5 | 15 |
| CE7 | 100Fe : 2.6Cu : 4.25K : 25SiO$_2$ : 3Ba : 0.5Al | 63 | 18 | 2.0 | 0.02 | 187 | 0.8 | 17 |
| CE8 | 100Fe : 0.2Cu : 0.5K : 40SiO$_2$ : 11 Ba : 1B | 75 | 17 | 1.5 | 0.03 | 171 | 0.8 | 18 |
| CE9 | 100Fe : 5Cu : 8K : 10SiO$_2$ : 0.9Ba : 1.75B | 68 | 15 | 1.7 | 0.04 | 158 | 0.8 | 20 |
| CE10 | 100Fe : 0.2Cu : 0.5K : 10SiO$_2$ : 5Ba :2.6B | 65 | 13 | 2.0 | 0.05 | 134 | 0.7 | 20 |
| CE11 | 100Fe : 5Cu : 8K : 40SiO$_2$ : 10Ba : 0.3B | 72 | 14 | 1.5 | 0.01 | 172 | 0.8 | 18 |
| CE12 | 100Fe : 2.6Cu : 4.25K : 25SiO$_2$ : 11Ba : 0.3B | 73 | 15 | 1.3 | 0.01 | 177 | 0.9 | 20 |
| CE13 | 100Fe : 2.6Cu : 4.25K : 25SiO$_2$ : 0.9Ba : 2.6B | 65 | 18 | 1.6 | 0.04 | 167 | 0.8 | 20 |
| CE14 | 100Fe : 0.5Cu : 3.9K : 15SiO$_2$ : 5.5Ba : 1.25B | 69 | 16 | 1.6 | 0.03 | 169 | 0.6 | 15 |
| CE15 | 100Fe : 0.5Cu : 3.9K : 15SiO$_2$ : 1Ba :1.25B | 64 | 15 | 1.7 | 0.05 | 162 | 0.6 | 16 |
| CE16 | 100Fe : 0.5Cu : 3.9K : 25SiO$_2$ : 8Ba : 1.25B | 68 | 17 | 1.5 | 0.03 | 157 | 0.8 | 20 |
| CE17 | 100Fe : 0.5Cu : 3.9K : 25SiO$_2$ : 4Ba : 1.25B | 65 | 16 | 1.7 | 0.02 | 161 | 0.7 | 18 |

As shown in the results in Tables 1 and 2, the Ba- and B-doped iron-based catalyst for Fischer-Tropsch synthesis provided by the present invention exhibits higher CO conversion rate and lower selectivity toward CO$_2$ and CH$_4$, indicating that it has excellent catalytic activity; and the Ba- and B-doped iron-based catalyst Fischer-Tropsch synthesis provided by the present invention also has a lower deactivation rate, indicating that it has good thermal stability, which is particularly crucial for highly exothermic Fischer-Tropsch synthesis reactions under high catalytic activity conditions.

In contrast, the catalysts that do not contain Ba and/or B (such as Comparative Examples 1 to 3), the catalysts with other alkaline earth metal elements in the same Group as Ba (such as Comparative Examples 4 to 6), the catalysts containing Al in the same Group as B added (such as Comparative Examples 7 to 8), and the catalysts with both Ba and B added but in amounts outside the scope defined by the present invention, all fail to achieve the excellent catalytic activity and good thermal stability exhibited by the iron-based catalyst for Fischer-Tropsch synthesis of the present invention.

Unless otherwise specified, the terms used in the present invention shall have the meanings commonly understood by those skilled in the art.

The embodiments described in the present invention are only for illustrative purposes and are not intended to limit the scope of protection of the present invention. Those skilled in the art may make various other substitutions, changes, and improvements within the scope of the present invention. Therefore, the present invention is not limited to the aforementioned embodiments and is limited by the appended claims.

**Claims**

1. A Ba- and B-doped iron-based catalyst for Fischer-Tropsch synthesis comprising Fe, Cu, K and $SiO_2$, wherein, the iron-based catalyst is doped with Ba and B, and the mass ratios are controlled as follows: when the mass ratio of Fe to $SiO_2$ is 100 : 10 to less than 20, the ratio of Ba to B is 1 to less than 4 : 1; and when the ratio of Fe to $SiO_2$ is 100 : 20 to 40, the ratio of Ba to B is 4 to 6 : 1.

2. The iron-based catalyst for Fischer-Tropsch synthesis according to claim 1, wherein, the iron-based catalyst comprises components in a mass ratio: Fe : $SiO_2$ : Cu : K : Ba : B = 100 : 10~40 : 0.2~5 : 0.5~8 : 1~10 : 0.4~2.5.

3. A method for preparing the Ba- and B-doped iron-based catalyst for Fischer-Tropsch synthesis according to claim 1 or 2, wherein, it comprises the following steps:

   S1: forming an aqueous mixed solution of a water-soluble iron salt and a water-soluble copper salt, simultaneously preparing a precipitant solution, and adding 0 wt% to 100 wt% of a silicon source to the precipitant solution;
   S2: bringing the aqueous mixed solution into contact with the precipitant solution to carry out precipitation reaction, and separating the resulting precipitate after completion of the reaction;
   S3: mixing the precipitate with an aqueous solution of potassium auxiliary agent precursor and the remaining silicon source to form a mixed slurry, and subjecting the mixed slurry to slurrying treatment to obtain a slurry of catalyst precursor; and
   S4: drying and calcining the slurry of catalyst precursor;
   wherein, Ba is added in the following manners:

   adding a water-soluble barium salt to the aqueous mixed solution of step S1, with the barium concentration of being less than 2.0 g Ba/100 g water; or
   formulating a water-soluble barium salt into an aqueous solution with a concentration of less than 2.0 g Ba/100 g water, which is then added to the aqueous solution of potassium auxiliary agent precursor and/or the mixed slurry of step S3;
   wherein, B is added in the following manners:

   adding a boron source to the aqueous mixed solution and/or the precipitant solution of the step S1; or
   adding a boron source to the aqueous solution of potassium auxiliary agent precursor and/or the mixed slurry of step S3.

4. The method according to claim 3, wherein,

   the water-soluble barium salt is one or a combination of barium nitrate and barium hydroxide; and/or
   the boron source is one or more of boric acid, metaboric acid, boron oxide, and a water-soluble borate; and preferably, the water-soluble borate is potassium borate and/or sodium borate.

5. The method according to claim 3 or 4, wherein,

   the water-soluble iron salt is selected from iron nitrates, iron chlorides, and their respective hydrates, and the water-soluble copper salt is selected from copper nitrates, copper chlorides, and their respective hydrates; preferably, the concentration of Fe in the mixed aqueous solution is 5 to 100 g/L; and/or
   the precipitant is selected from one or more of sodium carbonate, aqueous ammonia, ammonium carbonate, sodium hydroxide, potassium hydroxide, and potassium carbonate; and preferably, the precipitant has a concentration of 50 to 150 g/L.

6. The method according to any one of claims 3 to 5, wherein,

   the silicon source is selected from one or more of potassium silicate solution, sodium silicate solution, and silica sol solution, with the concentration of $SiO_2$ being 10 wt% to 50 wt%; and/or
   the potassium auxiliary agent precursor is one or more of potassium nitrate, potassium carbonate, potassium bicarbonate, potassium chloride, and potassium silicate.

7. The method according to any one of claims 3 to 6, wherein,
in step S2, the precipitation reaction is carried out at a temperature of 5 to 95°C for 5 to 100 minutes, with the pH value controlled at 5 to 10 during precipitation.

8. The method according to any one of claims 3 to 7, wherein,
in step S3, the slurrying treatment is carried out at 10 to 80°C for 10 to 80 minutes, with the slurry controlled at a concentration of 5 wt% to 40 wt% during slurrying treatment.

9. The method according to any one of claims 3 to 8, wherein,

in step S4, the drying is carried out as follows: first, the slurry of catalyst precursor is subjected to spray drying, and the resulting powder is then dried in an air atmosphere at 110 to 300°C for 1 to 12 hours;
preferably, the spray drying is performed with a hot air inlet temperature of 180 to 400°C, and an exhaust air outlet temperature of 100 to 220°C.

10. The method according to any one of claims 3 to 9, wherein,
in step S4, the calcining is carried out at 400 to 600°C for 1 to 15 hours.

**Electronic image 2**

FIG. 1

## INTERNATIONAL SEARCH REPORT

| International application No. |
| --- |
| **PCT/CN2023/133696** |

**A. CLASSIFICATION OF SUBJECT MATTER**

B01J23/78(2006.01)i; B01J23/75(2006.01)i; B01J23/83(2006.01)i; C10G2/00(2006.01)i

According to International Patent Classification (IPC) or to both national classification and IPC

**B. FIELDS SEARCHED**

Minimum documentation searched (classification system followed by classification symbols)

IPC:B01J C10G

Documentation searched other than minimum documentation to the extent that such documents are included in the fields searched

Electronic data base consulted during the international search (name of data base and, where practicable, search terms used)

CNABS; CNTXT; DWPI; SIPOABS; CNKI; USTXT; EPTXT; JPTXT; WOTXT: ISI Web of Knowledge; 万方, WANFANG; 超星, CHAOXING: 国家能源投资集团有限责任公司, 北京低碳清洁能源研究所, 费托合成, 钡, 碱土金属, 硼, 铁, 铜, 钾, 氧化硅, Fischer Tropsch, SiO2, Barium, alkaline earth metal, boron, Fe, iron, Cu, copper, potassium, silicon oxide

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116440906 A (CHN ENERGY INVESTMENT GROUP CO., LTD. et al.) 18 July 2023 (2023-07-18) <br> claims 1-10 | 1-10 |
| A | CN 101767010 A (SHENHUA GROUP CORP., LTD. et al.) 07 July 2010 (2010-07-07) <br> description, paragraphs 11-25, and table 3 | 1-10 |
| A | CN 102008960 A (SOUTH-CENTRAL UNIVERSITY FOR NATIONALITIES et al.) 13 April 2011 (2011-04-13) <br> description, paragraphs 6-21 | 1-10 |
| A | CN 111774060 A (CHN ENERGY INVESTMENT GROUP CO., LTD. et al.) 16 October 2020 (2020-10-16) <br> description, paragraphs 6-21 | 1-10, |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 February 2024** | **27 February 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/133696**

### C. DOCUMENTS CONSIDERED TO BE RELEVANT

| Category* | Citation of document, with indication, where appropriate, of the relevant passages | Relevant to claim No. |
|---|---|---|
| A | LI, Jiafan et al. "Effects of alkaline-earth metals on the structure, adsorption and catalytic behavior of iron-based Fischer–Tropsch synthesis catalysts" *Applied Catalysis A: General,* Vol. 464, 18 May 2013 (2013-05-18), pages 10-19 ISSN: 0926-860X, abstract, and experiments | 1-10 |
| A | WAN, Hongliu et al. "Promotive effect of boron oxide on the iron-based catalysts for Fischer-Tropsch synthesis" *Fuel,* Vol. 281, 27 July 2020 (2020-07-27), pages 1-9 ISSN: 1873-7153, abstract, experiments | 1-10 |

**INTERNATIONAL SEARCH REPORT**
Information on patent family members

International application No.

**PCT/CN2023/133696**

| Patent document cited in search report | | | Publication date (day/month/year) | Patent family member(s) | | | Publication date (day/month/year) |
|---|---|---|---|---|---|---|---|
| CN | 116440906 | A | 18 July 2023 | None | | | |
| CN | 101767010 | A | 07 July 2010 | CN | 101767010 | B | 22 August 2012 |
| CN | 102008960 | A | 13 April 2011 | CN | 102008960 | B | 10 April 2013 |
| CN | 111774060 | A | 16 October 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1245255 C
- CN 101293206 A
- CN 101298046 A
- CN 107913714 B
- CN 105478128 B